# EUROPÄISCHE PATENTANMELDUNG

(11) **EP 1 118 477 A2**
(43) Veröffentlichungstag der Anmeldung: **25.07.2001**
(21) Anmeldenummer: 01101055.0
(22) Anmeldetag: 18.01.2001
(51) Int. Cl.: B60B 9/00

(54) **Radfederung**

(30) Priorität: 19.01.2000 DE 10002184; 25.05.2000 DE 10025965
(71) Anmelder: Mödelhammer, Raimund, 50678 Köln (DE)
(72) Erfinder: Mödelhammer, Raimund, 50678 Köln (DE)
(74) Vertreter: Freischem, Werner, Dipl.-Ing.

(57) **Zusammenfassung**

Radfederung, mit einem Nabengehäuse (1), das über Wälzlager (7) drehbar auf einem Lagerkörper (2) gelagert ist und bei der die starre Tragachse (5) des Rades im Abstand von der Drehachse (6) angeordnet ist und zwischen diesen Achsen mindestens eine Feder angeordnet ist.

Zur Erzielung einer kompakten und zuverlässigen Radfederung haben im eingebauten Zustand die Drehachse (6)und die Resultierende der auf die Nabe einwirkenden Kräfte einen ein Drehmoment erzeugenden horizontalen Abstand von der Tragachse (5) der Nabe und zwischen dem Lagerkörper (2) und der Tragachse (5) oder einem damit starr verbundenen Teil ist mindestens eine die Schwenkbewegung des Lagerkörpers (2) um die Tragachse (5) abfedernde Feder (8, 8', 8") angeordnet.

## Beschreibung

Die Erfindung bezieht sich auf eine Radfederung mit einem hohlzylindrischen Nabengehäuse, das über Wälzlager drehbar auf einem im wesentlichen hohlzylindrischen Lagerkörper gelagert ist und bei der eine starre Tragachse des Rades im Abstand von der Drehachse angeordnet und über mindestens eine Feder gegen den Lagerkörper abgestützt ist.

Radfederungen dieser Art sind bekannt aus dem DE-PS 567 165 und der DE-OS 32 22 262. Bei diesen insbesondere für Fahrräder bestimmten Radfederungen ist die starr in der Radgabel befestigte Tragachse oberhalb der Drehachse der um den Lagerkörper rotierenden Nabe angeordnet, und zwischen dem nicht rotierenden Lagerkörper und der starren Tragachse sind Druckfedern angeordnet, die den Lagerkörper und damit die Radnabe federnd gegen die Tragachse abstützen. Dabei ist der Lagerkörper vertikal verschiebbar gegenüber der starren Tragachse geführt. Die Last des Rades wird von unterhalb der Tragachse angeordneten Federn aufgenommen, während oberhalb der Tragachse zwischen Tragachse und Lagerkörper schwächere Federn angeordnet sind, welche den Lagerkörper gegen die Wirkung der unterhalb der Tragachse angeordneten Federn mit Vorspannung in einer Mittellage halten.

Beide bekannte Radfederungen haben den Nachteil, daß die verschiebbare Führung des Lagerkörpers an beiden Seiten der Radnabe erheblich belastet wird, einem starken Verschleiß unterliegt und zum Verklemmen neigt. Wegen des großen Hebelarmes, mit dem ein Radumfang auf die Radnabe einwirkt, können auf das Rad wirkende Seitenkräfte nicht störungsfrei von der Radnabe aufgenommen werden.

Der Erfindung liegt die Aufgabe zugrunde, eine Radfederung zu schaffen, die kompakt und mit geringem Aufwand herstellbar ist und bei der die vom Radumfang auf die Radnabe ausgeübten Kräfte zuverlässig aufgefangen werden, ohne die Federung des Rades zu beeinträchtigen.

Diese Aufgabe wird - ausgehend von der eingangs beschriebenen Radfederung - erfindungsgemäß dadurch gelöst, daß der Lagerkörper starr mit zwei seitlichen Lagerdeckeln verbunden ist, welche Lagerbuchsen zur drehbaren Aufnahme der Tragachse aufweisen und im eingebauten Zustand die Drehachse einen ein Drehmoment erzeugenden horizontalen Abstand von der Tragachse der Nabe hat und zwischen dem Lagerkörper und der Drehachse mindestens eine die Schwenkbewegung des Lagerkörpers um die Tragachse abfedernde Feder angeordnet ist.

Damit der Federweg möglichst groß ist, ist die Tragachse möglichst nahe an der zylindrischen Wandung des Lagerkörpers angeordnet. Der Lagerkörper ist über eine oder mehrere innerhalb des Lagerkörpers angeordnete Federn gegen die Tragachse abgestützt. Außer den Federn können auch Dämpferelemente, z.B. hydraulische Dämpfer, zwischen dem Lagerkörper und der Tragachse bzw. zwischen dem Lagerkörper und einem mit der Tragachse starr verbundenen Teil angeordnet sein.

Vorteilhafterweise ist die Tragachse mit einem Hebel verbunden, und der Hebel ist über zu beiden Seiten des Hebels angeordnete Druckfedern oder Zugfedern gegen den Lagerkörper abgestützt. Auf diese Weise kann die Federung mit einer Vorspannung versehen werden. Auch kann ein Dämpfer zwischen dem Hebel und dem Lagerkörper angeordnet werden.

Es ist auch möglich, die Feder außerhalb der Radnabe zwischen dem Lagerdeckel und der Tragachse oder einem mit der Tragachse starr verbundenen Teil, z.B. die Gabel eines Fahrrades, anzuordnen. Diese Ausführung ist erforderlich, wenn der Lagerkörper aus Vollmaterial besteht oder innerhalb des Lagerkörpers zu wenig Raum für eine Feder ist.

Als Federelemente, welche die Schwenkbewegung des Lagerkörpers gegenüber der starren Tragachse federnd abstützen, sind beispielsweise geeignet Schraubenfedern, Kegelfedern, Blattfedern, Spiralfedern, Schenkelfedern, Tellerfedern, Torsionsfedern aus elastomerem Material, ggf. aber auch Luftfedern.

Die Radfederung nach der Erfindung ist für mit Rädern versehene Fahrzeuge und Geräte jeder Art geeignet, insbesondere aber für Fahrräder, Kinderwagen, Rollstühle, Einkaufswagen, Teewagen, fahrbare Behälter oder Untersätze. Auch für Seilrollen, Seilräder, Spannrollen und dergleichen kann diese Radfederung eingesetzt werden.

Die federnde Nabe kann auch mit einem Nabenmotor, einer Nabenbremse, einem Getriebe oder einer anderen, ein Drehmoment um die Drehachse des Nabengehäuses bewirkenden Vorrichtung ausgerüstet sein. Bleibt das aufzunehmende Drehmoment relativ klein, dann kann die ein Drehmoment um die Drehachse bewirkende Vorrichtung unmittelbar am Lagerkörper befestigt sein. In diesem Fall überlagern sich die vom Lagerkörper aufzunehmenden Reaktionskräfte mit den auf die Federung einwirkenden Kräften.

Sind die von der in der Nabe angebrachten Vorrichtung bewirkten Drehmomente relativ groß, dann ist es von Vorteil, die Bremsvorrichtung oder den Nabenmotor nicht am Lagerkörper zu befestigen, sondern an einem Träger, der um die Drehachse schwenkbar am Lagerkörper gelagert ist und von einer über Gelenke und einer angelenkten Schwinge mit einem starr mit der Tragachse verbundenen Teil verbunden ist.

In der folgenden Beschreibung werden Ausführungsbeispiele der Erfindung unter Bezugnahme auf die Zeichnungen näher erläutert. Die Zeichnungen zeigen in
- Fig. 1: eine Schnittansicht einer Radnabe mit Radfederung,
- Fig. 2: eine schaubildliche Darstellung der geschnittenen Radnabe mit einer auf Biegung beanspruchten Feder,
- Fig. 3: eine Schnittansicht einer Radnabe, deren Lagerkörper über Schraubenfedern gegen die Tragachse abgestützt ist,
- Fig. 4: eine Schnittansicht einer Radnabe, deren Lagerkörper über Blattfedern gegen die Tragachse abgestützt ist,
- Fig. 5: eine Seitenansicht einer Teewagenrolle,
- Fig. 6: eine Frontansicht der Teewagenrolle nach Fig. 5,
- Fig. 7: eine Ansicht nach der Schnittlinie VII-VII in Fig. 5,
- Fig. 8: eine Seitenansicht einer Nabe mit Nabenmotor
- Fig. 9: eine Schnittansicht der Nabe mit Nabenmotor nach Fig. 8,
- Fig. 10: eine Seitenansicht einer Nabe mit Antrieb
- Fig. 11: eine Schnittansicht der Nabe mit Antrieb nach Fig. 10,
- Fig. 12: eine Seitenansicht einer Nabe mit Bremsvorrichtung,
- Fig. 13: eine Schnittansicht einer Nabe mit Bremsvorrichtung nach Fig. 12.

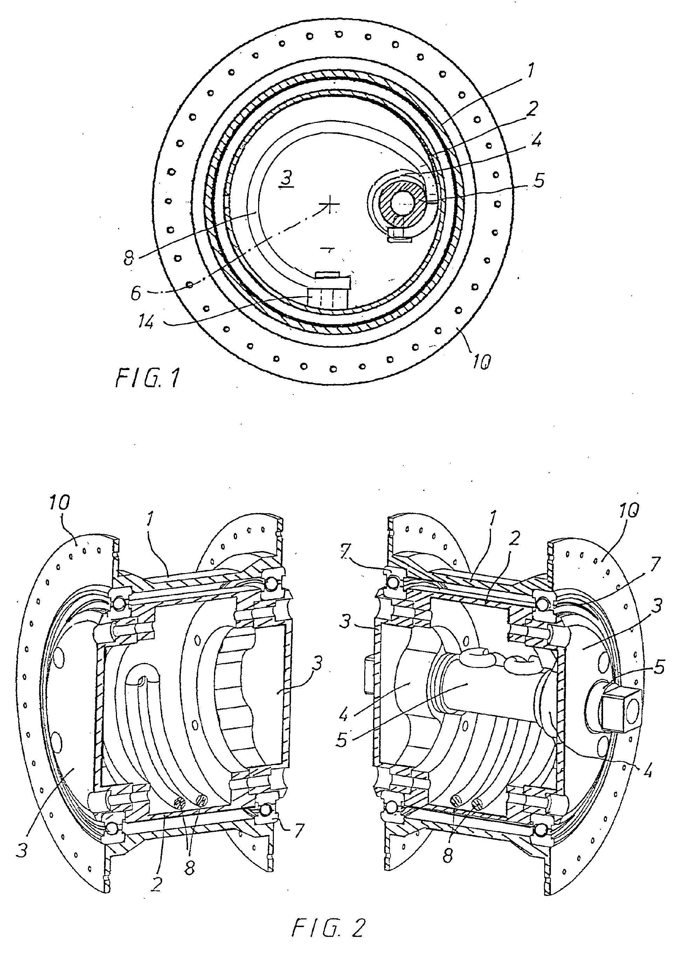

Die Fig. 1 und 2 zeigen eine innerhalb einer Radnabe angeordnete Radfederung mit einem hohlzylindrischen Nabengehäuse 1, das an beiden Seiten mit Flanschen 10 versehen ist, in welche Speichen eingesetzt werden können. Das Nabengehäuse 1 ist über Wälzlager 7 drehbar auf einem Lagerkörper 2 gelagert. Der Lagerkörper 2 umfaßt zwei seitliche Lagerdeckel 3, die mit dem Lagerkörper 2 starr verbundenen sind. Im Abstand von der Drehachse 6, die mit der Achse des Nabengehäuses 1 und des hohlzylindrischen Teils des Lagerkörpers 2 zusammenfällt, ist eine starre Tragachse 5 angeordnet. Um diese Tragachse 5 ist verschwenkbar der Lagerkörper 2 mit den Lagerdeckeln 3 gelagert. An den zwei seitlichen Lagerdeckeln 3 sind nach innen gerichtete Lagerbuchsen 4 vorgesehen, welche zylindrische Abschnitte der Tragachse 5 aufnehmen. Im eingebauten Zustand hat die Drehachse 6 einen ein Drehmoment erzeugenden horizontalen Abstand von der Tragachse 5 der Nabe. Zwischen dem Lagerkörper 2 und der Tragachse 5 ist eine Feder 8 angeordnet, welche die Schwenkbewegung des Lagerkörpers 2 und damit auch des Nabengehäuses 1 um die Tragachse 5 abfedert. In Fig. 1 ist der Lagerkörper 2 mit einem Sockel 14 versehen, auf dem ein Ende der auf Biegung beanspruchten Spiralfeder 8 befestigt ist. Das andere Ende der Spiralfeder 8 ist an der Tragachse 5 befestigt.

Die Spiralfeder 8 kann derart angeordnet und ausgebildet sein, daß sie sich beim Einfedern in Abhängigkeit vom Federweg mehr oder weniger an die Innenwand des Lagerkörpers 2 anlegt und dadurch um so härter wird, je größer der Federweg bzw. die Schwenkbewegung des Lagerkörpers um die Tragachse 5 ist.

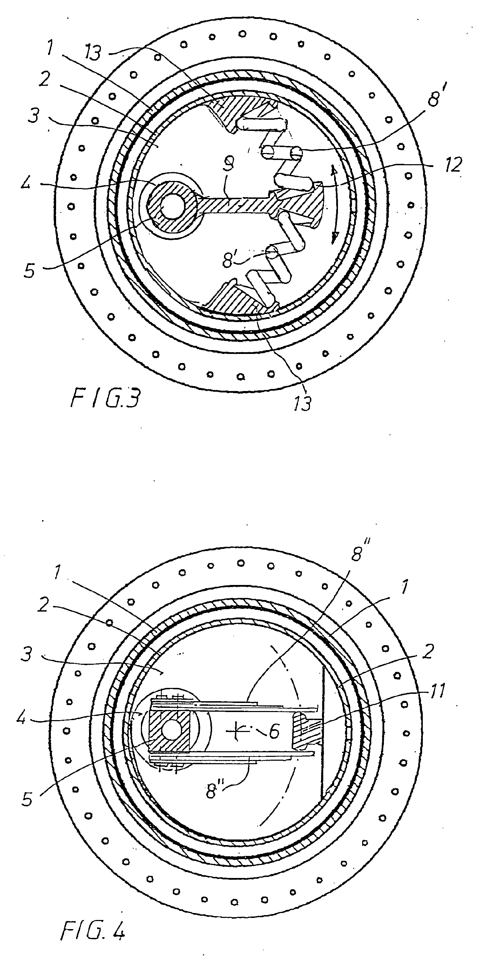

Bei der Ausführungsform nach Fig. 3 ist die Tragachse 5 mit einem Hebel 9 verbunden, und der Hebel 9 ist über zu beiden Seiten des Hebels 9 angeordnete Druckfedern 8' oder Zugfedern gegen den Lagerkörper 2 abgestützt.

Auf diese Weise kann die Federung mit einer Vorspannung versehen werden. Bei dieser Ausführungsform sind die Federn Schraubenfedern 8', die in Federpfannen 12,13 gehalten werden, die am freien Ende des Hebels 9 sowie am Lagerkörper 2 angeordnet sind.

Bei der Ausführungsform nach Fig. 4 ist auf der Oberseite und Unterseite der Tragachse 5 je eine Blattfeder 8" befestigt, die mit ihren freien Enden an einem Anschlag 11 anliegen, der am Lagerkörper 2 angeordnet ist.

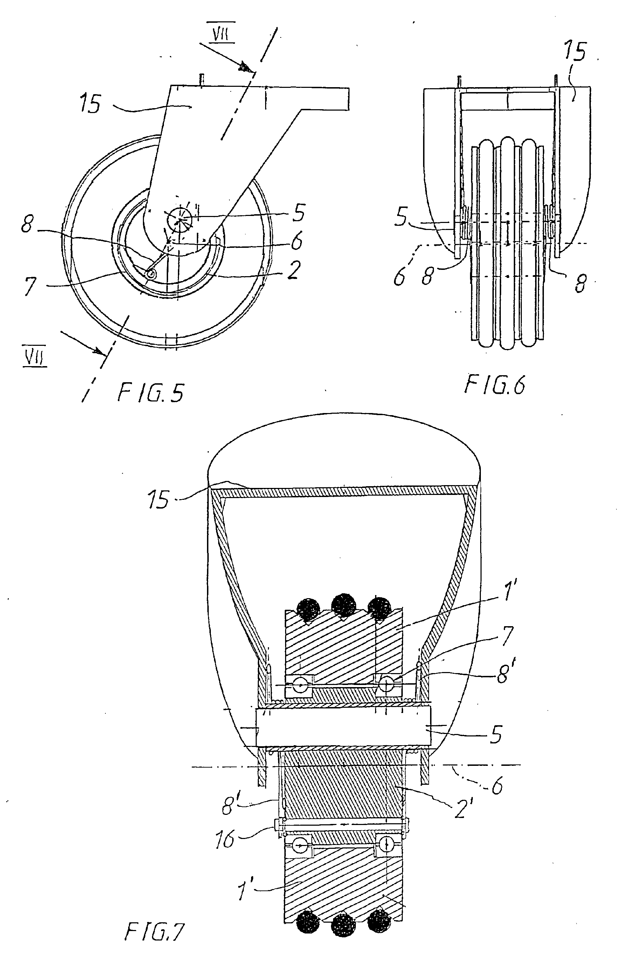

Die erfindungsgemäße Radfederung ist bei dem Ausführungsbeispiel nach den Fig. 5, 6 und 7 an einer Lenkrolle verwirklicht. Das Nabengehäuse 1' wird von der Radscheibe gebildet und der Lagerkörper 2' ist aus Vollmaterial. Die Schenkelfedern 8' sind zu beiden Seiten des Lagerkörpers 2' außerhalb der Nabe angeordnet. Ein Schenkel der Schenkelfedern 8' stützt sich an der fest mit der Tragachse 5 verbundenen Radgabel 15 ab, während sich der andere Schenkel der Schenkelfedern 8' am Widerlager 16 abstützt, das am Lagerkörper 2' angeordnet ist.

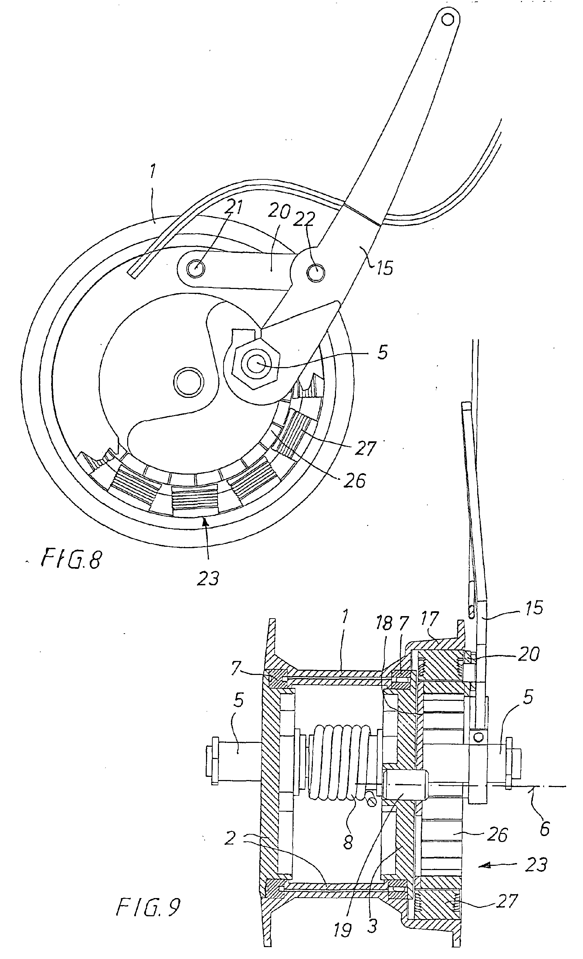

Die Ausführungsform nach den Fig. 8 und 9 betrifft eine Radfederung, bei der innerhalb des Nabengehäuses 1 ein Elektromotor 23 angeordnet ist. Der Elektromotor 23 setzt sich zusammen aus einem Stator 26 und einem Rotor 27, der am Nabengehäuse 1 befestigt ist. Der Stator 26 ist an einem Träger 18 befestigt, der über einen Bolzen 19 um die Drehachse 6 schwenkbar am Lagerkörper 2 bzw. an dem fest mit dem Lagerkörper 2 verbundenen Lagerdeckel 3 gelagert ist. Ferner ist der Halter 18 über eine angelenkte Schwinge 20 mit einem Teil 15 verbunden, das starr mit der Tragachse 5 verbunden ist. Der Halter 18 überträgt über die Schwinge 20 die Reaktionskräfte des Antriebsmotors 23. Der Lagerkörper 2 ist weitgehend von den Reaktionskräften des Motors 23 unabhängig gegen die Wirkung der Feder 8 um die Tragachse 5 schwenkbar. Die über die Gelenke 21 und 22 angelenkte Schwinge 20 behindert dabei nicht die Schwenkbewegung des Lagerkörpers 2 um die Tragachse 5.

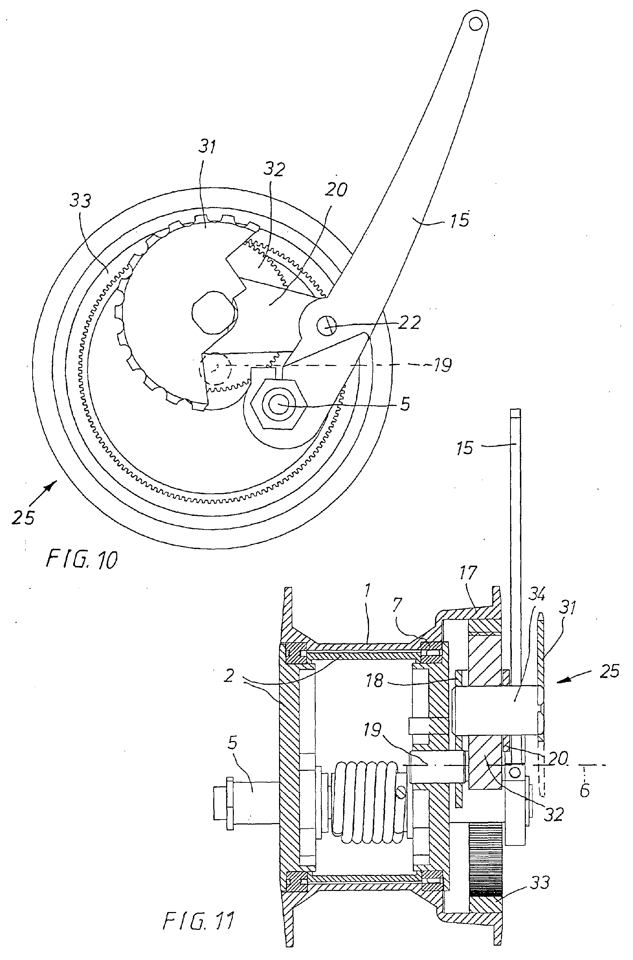

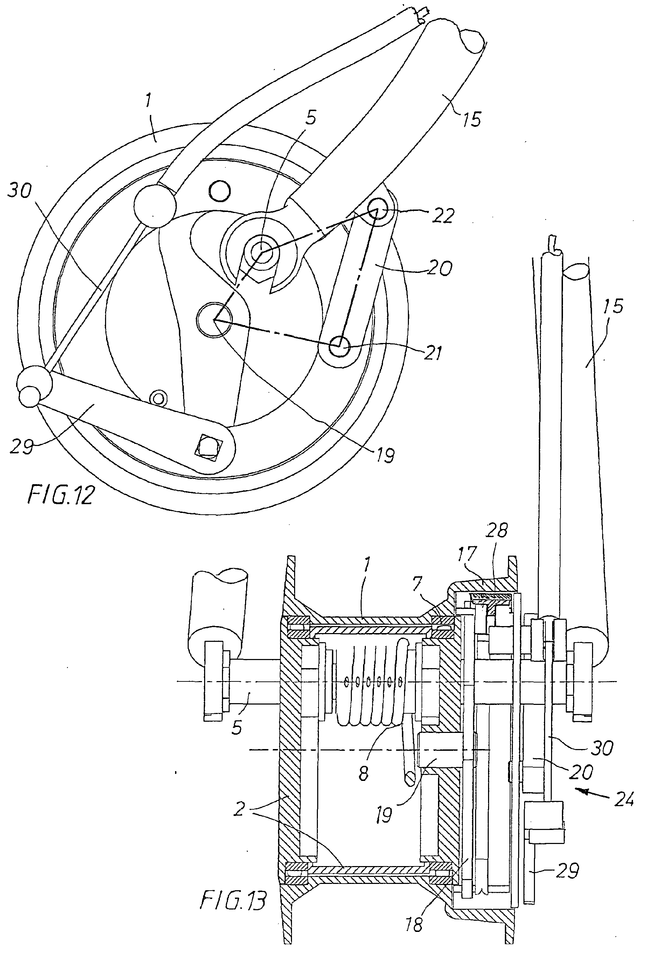

Die Fig. 10 und 11 zeigen eine Radfederung mit einem Getriebe 25. Das Getriebe setzt sich zusammen aus einem Kettenzahnrad 31, das über eine Welle 34 drehfest mit einem Ritzel 32 verbunden ist, welches mit einem Innenzahnkranz 33 kämmt, das an einer Gehäuseerweiterung 17 des Nabengehäuses 1 befestigt ist. Die Welle 34, welche das Kettenzahnrad 31 mit dem Ritzel 32 verbindet, ist in einem Träger 18 drehbar gelagert, der über einen Bolzen 19 um die Drehachse 6 schwenkbar gelagert ist. Der Träger 18 ist über eine angelenkte Schwinge 20 mit einem Teil 15 verbunden, das seinerseits starr mit der Tragachse 5 verbunden ist. Auch hier nimmt die Schwinge 20 die Reaktionskräfte des Getriebes auf. Anstelle eines Übersetzungsgetriebes kann auch ein Schaltgetriebe im Nabengehäuse 1 angeordnet werden.

Bei dem Ausführungsbeispiel nach den Fig. 12 und 13 ist im Nabengehäuse 1 eine Bremsvorrichtung 24 angeordnet. Diese Bremsvorrichtung setzt sich zusammen aus Bremsbacken 28, die von einem Bremshebel 29 gespreizt werden können. Die Bremsvorrichtung 24 ist an einem Träger 18 befestigt, der um die Drehachse 6 mittels eines Bolzens 19 am Lagerkörper 2 gelagert ist und der über eine angelenkte Schwinge 20 gegen ein fest mit der Tragachse 5 verbundenen Teil 15 abgestützt ist. Die Bremse 24 wird über einen Bowdenzug 30 betätigt, der am Bremshebel 29 angreift.

Die Anordnung der den Träger 18 abstützenden Schwinge 20 ist derart, daß die beim Bremsen auftretenden Reaktionskräfte so in die Radgabel 15 eingeleitet werden, daß sie den Kräften entgegenwirken, die zusätzlich durch die Bremsung auf die Tragachse 5 einwirken.

Anstelle einer Trommelbremse kann auch eine Scheibenbremse vorgesehen werden bzw. jede andere Art von Nabenbremsen.

### Bezugszeichenliste:

- 1: Nabengehäuse
- 1': Radscheibe
- 2: Lagerkörper
- 2': Lagerkörper
- 3: Lagerdeckel
- 4: Lagerbuchse
- 5: Tragachse
- 6: Drehachse
- 7: Wälzlager
- 8: Feder (auf Biegung beanspruchte)
- 8': Feder (auf Druck oder Zug beanspruchte)
- 8": Blattfeder
- 9: Hebel
- 10: Flansch
- 11: Anschlag
- 12: Federpfanne
- 13: Federpfanne
- 14: Sockel
- 15: mit der Tragachse starr verbundenes Teil
- 16: Widerlager für Feder
- 17: Gehäuseerweiterung (Bremstrommel)
- 18: Träger
- 19: Drehzapfen
- 20: Schwinge
- 21: Gelenk
- 22: Gelenk
- 23: Antriebsmotor
- 24: Bremsvorrichtung
- 25: Getriebe
- 26: Stator
- 27: Rotor
- 28: Bremsbacke
- 29: Bremshebel
- 30: Bowdenzug
- 31: Kettenzahnrad
- 32: Ritzel
- 33: Innenzahnkranz
- 34: Welle

## Patentansprüche

1. Radfederung, mit einem Nabengehäuse (1), das über Wälzlager (7) drehbar auf einem Lagerkörper (2) gelagert ist und bei der die starre Tragachse (5) des Rades im Abstand von der Drehachse (6) angeordnet ist, **dadurch gekennzeichnet,** daß im eingebauten Zustand die Drehachse (6)und die Resultierende der auf die Nabe einwirkenden Kräfte einen ein Drehmoment erzeugenden Abstand von der Tragachse (5) der Nabe haben und zwischen dem Lagerkörper (2) und der Tragachse (5) oder einem damit starr verbundenen Teil mindestens eine die Schwenkbewegung des Lagerkörpers (2) um die Tragachse (5) abfedernde Feder (8, 8', 8") angeordnet ist.

2. Radfederung nach Anspruch 1, **dadurch gekennzeichnet,** daß die Tragachse (5) möglichst nahe am Innenring des Wälzlagers (7) angeordnet ist.

3. Radfederung nach Anspruch 1 oder 2, **dadurch gekennzeichnet,** daß der Lagerkörper (2) hohlzylindrisch ausgebildet ist und starr mit zwei seitlichen Lagerdeckeln (3) verbunden ist, welche Lagerbuchsen (4) zur drehbaren Aufnahme der Tragachse (5) aufweisen.

4. Radfederung nach Anspruch 3, **dadurch gekennzeichnet,** daß der Lagerkörper (2) über eine oder mehrere innerhalb des Lagerkörpers (2) angeordnete Federn (8,8',8") gegen die Tragachse (5) abgestützt ist.

5. Radfederung nach Anspruch 4, **dadurch gekennzeichnet,** daß die Feder (8,8") eine auf Biegung beanspruchte Feder (8) ist, die an einem Ende drehfest mit der Tragachse (5) und mit dem anderen Ende am Lagerkörper (2) befestigt oder festgelegt ist.

6. Radfederung nach Anspruch 5, **dadurch gekennzeichnet,** daß die auf Biegung beanspruchte Feder (8) eine Spiralfeder ist.

7. Radfederung nach Anspruch 3, **dadurch gekennzeichnet,** daß an der Tragachse (5) ein Hebel (9) angeordnet ist und zwischen diesem Hebel (9) und dem Lagerkörper (2) mindesten eine auf Druck und/oder auf Zug beanspruchte Feder (8') angeordnet ist.

8. Radfederung nach einem der Ansprüche 1 bis 7, **dadurch gekennzeichnet,** daß zwischen dem Lagerkörper (2,2') und der Tragachse (5) oder einem damit fest verbundenen Teil (15) ein die Schwenkbewegungen des Lagerkörpers (2,2') um die Tragachse (5) dämpfender Dämpfer angeordnet ist.

9. Radfederung nach einem der Ansprüche 1 bis 7, **dadurch gekennzeichnet,** daß mindestens eine die Schwenkbewegungen des Lagerkörpers (2) um die Tragachse (5) abfedernde Feder (8) außerhalb des Lagerkörpers (2) angeordnet ist.

10. Radfederung nach einem der Ansprüche 1 bis 8, **dadurch gekennzeichnet,** daß insbesondere zu beiden Seiten des Lagerkörpers (2) Schenkelfedern (8', 8') angeordnet sind, die mit einem Schenkel am Lagerkörper (2) und mit dem anderen Schenkel gegen ein starr mit der Tragachse (5) verbundenes Teil (15), z. B. der Radgabel abgestützt ist.

11. Radfederung nach einem der Ansprüche 1 bis 10, **dadurch gekennzeichnet,** daß innerhalb des Nabengehäuses (1) eine ein Drehmoment um die Drehachse (6) bewirkende Vorrichtung - z.B. eine Bremsvorrichtung (24), ein Antriebsmotor (23) oder ein Getriebe (25) - angeordnet ist, welche das von ihr bewirkte Drehmoment auf das Nabengehäuse (1) überträgt.

12. Radfederung nach Anspruch 11, **dadurch gekennzeichnet,** daß die ein Drehmoment um die Drehachse (6) erzeugende Vorrichtung (23,24,25) neben dem Lagerkörper (2,3,2') angeordnet ist und das über Wälzlager (7) auf den Lagerkörper (2,2') drehbar gelagerte Nabengehäuse (1) eine Gehäuseerweiterung (17) aufweist, die - von einem Wälzlager (7) ausgehend - sich nach außen erstreckt.

13. Radfederung nach Anspruch 11 oder 12, **dadurch gekennzeichnet,** daß die ein Drehmoment um die Drehachse (6) erzeugende Vorrichtung (23,24,25) am Lagerkörper (2,3) befestigt ist.

14. Radfederung nach Anspruch 11 oder 12, **dadurch gekennzeichnet,** daß die ein Drehmoment um die Drehachse (6) erzeugende Vorrichtung (23,24,25) an einem Träger (18) befestigt ist, der um die Drehachse (6) schwenkbar am Lagerkörper (2,3) gelagert ist und der über eine angelenkte Schwinge (20) gegen ein starr mit der Tragachse (5) verbundenes Teil (15) abgestützt ist.

15. Radfederung nach Anspruch 14, **dadurch gekennzeichnet,** daß die Anordnung und Länge der Schwinge (19) derart ist, daß die von der Schwinge (19) aufzunehmenden Zug- und Druckkräfte den auf die Tragachse (5) wirkenden Kräften entgegengerichtet sind.
